# EUROPEAN PATENT APPLICATION

(11) **EP 4 400 007 A1**
(43) Date of publication of application: **17.07.2024**
(21) Application number: 23811212.2
(22) Date of filing: 19.07.2023
(51) Int. Cl.: A47G 19/14

(54) **INFUSED OBJECT CONTAINER AND INFUSING DEVICE**

(30) Priority: 21.07.2022 CN 202221920930 U
(71) Applicant: Ningbo Smal Electrics Co., Ltd., Ningbo, Zhejiang 315400 (CN)
(72) Inventor: DONG, Yuejun, Ningbo, Zhejiang 315400 (CN); YU, Yingli, Ningbo, Zhejiang 315400 (CN)
(74) Representative: MERH-IP Matias Erny Reichl Hoffmann Patentanwälte PartG mbB
(86) International application number: PCT/CN2023/108192
(87) International publication number: WO 2023/227142

(57) **Abstract**

Provided in the present application an infused object container and an infusing device, the infused object container comprises: a body, which is provided with a through liquid injection port; a baffle, which is movably arranged at the liquid injection port; a closing mechanism, which senses the impact force of liquid in the liquid injection port that is borne by the baffle and can apply a driving force to the baffle, so as to cause the baffle to close the liquid injection port or force the baffle to open the liquid injection port; and a connecting mechanism, which is connected to the body and used for connecting to at least one infused object storage member.

## Description

### TECHNICAL FIELD

The present application relates to the technical field of infusing appliances and the like, and in particular to an infused object container and an infusing device.

### BACKGROUND

A teapot typically includes a pot cover, a pot body, and an infused object receiving member. In an existing teapot, the pot cover, the pot body and the infused object receiving member are usually provided separately. When water is to be added into the pot, the pot cover needs to be taken off or rotated upwards to leave the pot body; when the infused object receiving member is taken out, the pot cover needs to be opened to take out the infused object receiving member, and thus the operation is relatively cumbersome. For example, a Chinese Utility Model Patent with Publication No. CN204133016U discloses a pot and an infuser thereof, the infuser comprises a lifting button, an upper rod, a lower rod, and a tea basket connected to the lower rod; the bottom end of the upper rod is hinged to the top end of the lower rod; the lifting button is connected to the top end of the upper rod. The utility model can more conveniently implement the separation of tea and water.

In addition, when it needs to add water into the above pot, the pot cover needs to be taken off, so that there is at least a problem of inconvenience in adding water.

In addition, the existing pot cover has a problem of being quite limited in their application, for example it can only be used to cover a teapot which fits with it.

It should be noted that the above information is only for understanding of the background art, and therefore should not be construed as limiting the present application in any way.

### SUMMARY

The object of the present application is to provide an infused object container and an infusing device, in order to overcome the problems that a cover body needs to be taken off when filling a container with liquid, which leads to a more limited application of the cover body or the like in the prior art.

In order to achieve the above object, the present application provides a technical solution as follow: an infused object container, comprising: a body, the body is provided with a liquid injection port, the liquid injection port is a through-hole; a baffle movably disposed at the liquid injection port; a closing mechanism which senses an impact force of the liquid in the liquid injection port suffered by the baffle and can apply driving force to the baffle to closes the liquid injection port, or the closing mechanism is forced to allow the baffle to open the liquid injection port; and a connecting mechanism connected with the body for connecting at least one infused object receiving member.

In order to achieve the above object, the present application provides another technical solution as follow: an infusing device, comprising a liquid accommodating cavity, the liquid accommodating cavity has an open portion. The infusing device further comprises the aforementioned infused object container, and the body of the infused object container is disposed at the open portion.

Analysis shows that the infused object container provided by the present application may be used to cover on various types of liquid containers, such as teapots, traditional Chinese medicine pots, coffee pots, beverage pots, pots or the like, and the application thereof is greatly extended. When selecting the liquid accommodating cavity to be matched with infused object container, one can either select a corresponding container, or can select to apply to various types of containers. When liquid flows to the liquid injection port, the gravity and impact force of the liquid will drive the baffle to open, and when no liquid is injected, the closing mechanism drives the baffle to close, so that the liquid injection port and the baffle do not need to be manually operated.

### BRIEF DESCRIPTION OF THE DRAWINGS

FIG. 1 is a first assembled schematic diagram of a first embodiment of the present application;
FIG. 2 is a second assembled schematic diagram of the first embodiment of the present application;
FIG. 3 is a disassembled schematic diagram of the first embodiment of the present application;
FIG. 4 is a third assembled schematic diagram of the first embodiment of the present application;
FIG. 5 is a first schematic diagram illustrating an opening state of a baffle of the first embodiment of the present application;
FIG. 6 is a second schematic diagram illustrating an opening state of the baffle of the first embodiment of the present application;
FIG. 7 is a first schematic diagram illustrating a closed state of the baffle of the first embodiment of the present application;
FIG. 8 is a second schematic diagram illustrating a closed state of the baffle of the first embodiment of the present application;
FIG. 9 is a schematic diagram of an infused object receiving member of the first embodiment of the present application;
FIG. 10 is a first disassembled schematic diagram of a second embodiment of the present application;
FIG. 11 is a second disassembled schematic diagram of the second embodiment of the present application;
FIG. 12 is a first disassembled schematic diagram of a third embodiment of the present application;
FIG. 13 is a second disassembled schematic diagram of the third embodiment of the present application.

### DETAILED DESCRIPTION

The technical solutions in the exemplary embodiments of the present application will be clearly and completely described in the following in conjunction with the accompanying drawings in the exemplary embodiments of the present application. The exemplary embodiments described herein are for illustrative purposes only and are not intended to limit the scope of the present application, so it should be understood that various modifications and changes may be made thereto without departing from the scope of the present application.

In various of existing appliances such as teapots that require an infusing operation, a pot cover, a pot body and an infused object receiving member are usually provided separately. When water is to be added into the pot, the pot cover needs to be taken off or rotated upwards away from the pot body; when the infused object receiving member is to be taken out, the pot cover needs to be opened to take off the infused object receiving member, and thus the operation is relatively cumbersome.

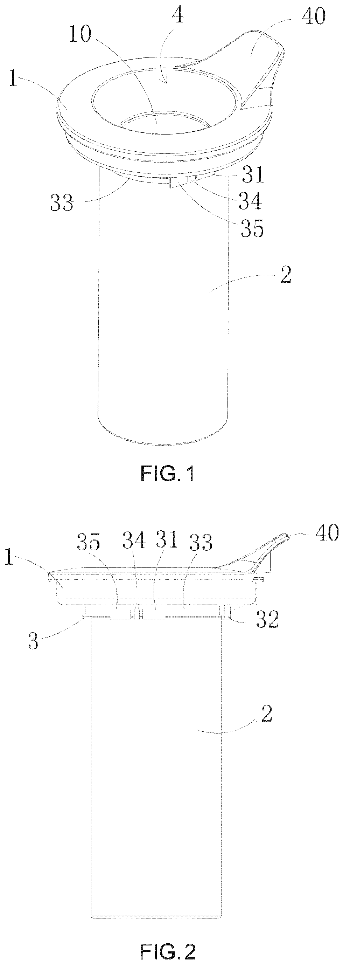

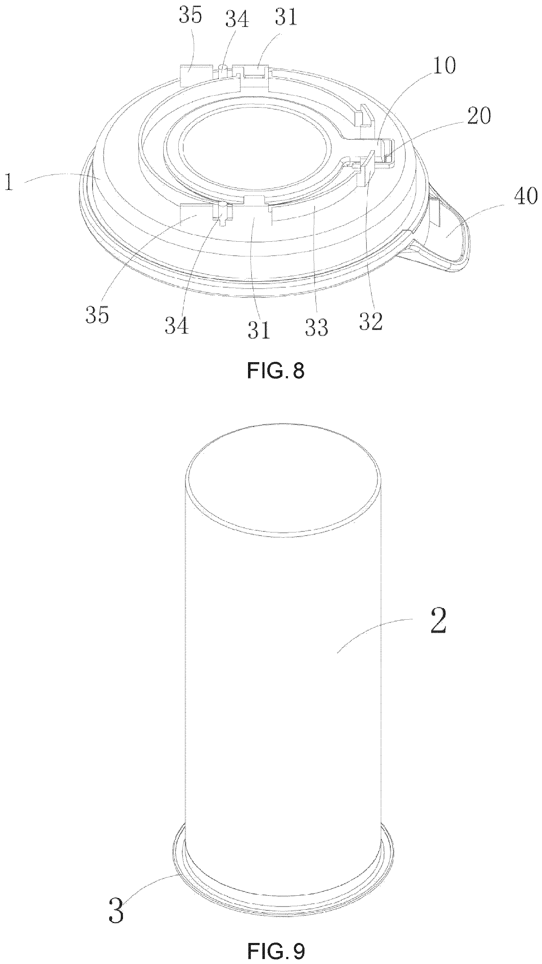

To address the above problems, one embodiment of the present application provides an infused object container, with reference to FIG. 1 to FIG. 9, the infused object container includes a body 1, a baffle 10, a closing mechanism 20, and a connecting mechanism 30. Specifically, the body 1 is provided with a liquid injection port 4 through up-and-down. In the embodiment shown in FIG. 1, the body 1 has a shape of annular-plate, but in other embodiments, it may have any other shapes such as a rectangular shape, a frame shape, a rod shape, etc., and may have various three-dimensional shapes such as a plate shape, a block shape, etc. The baffle 10 is movably disposed below the liquid injection port 4. Naturally, in other embodiments, the baffle may be disposed inside the liquid injection port 4. The baffle 10 can be opened by gravity and impact force of the liquid such as water in the liquid injection port 4, so that the liquid injection port 4 is unobstructed. The closing mechanism 20 has functions of sensing and driving or the like, when no liquid is injected, the baffle 10 is closed, and the closing mechanism 20 applies driving force to the baffle 10 to enable the baffle 10 to close the liquid injection port 4; when the liquid is injected, the closing mechanism 20 senses gravity, impact force or the like from the liquid, and when the force is larger than the driving force, the baffle 10 is opened. The connecting mechanism 30 is provided on the body 1 to connect with the infused object receiving member 2.

For a more intuitive and visual illustration of the embodiments of the present application, hereinafter a specific explanation is provided by using a particular application scenario for instance, the embodiments of the present application involve an appliance for infusing tea with water: a pot cover disposed on a pot.

When adding water to the appliance, the body 1 may be directly placed below water flow, after the water flow contacts the baffle 10, by means of gravity of the water, the baffle 10 overcomes the driving force applied by the closing mechanism 20, so that the liquid injection port 4 is opened, and the water can be added through the liquid injection port 4 without opening the pot cover or taking it off.

Meanwhile, the connecting mechanism 30 can be slidably connected with the infused object receiving member 2, so that the body 1 and the infused object receiving member 2 are connected together as a whole conveniently, the infused object receiving member 2 can be taken out synchronously when taking off the pot cover, and when the teapot is inclined the infused object receiving member 2 can be secured by the body 1, so that inclination and swinging will not occur, thereby the convenience in use is improved and the usage experience is optimized.

Since the infused object receiving member 2 is required to accommodate tea leaves and extract tea ingredients therefrom, the infused object receiving member 2 is provided with a hollow cavity to accommodate infused object (such as tea) and has an opening. This opening is communicated with the liquid injection port 4 after being connected with the connecting mechanism 30, and the infused object receiving member 2 is provided with a leak hole (not shown) communicating with the hollow cavity.

Referring to FIG. 1, the liquid injection port 4, which is a vertical through-hole, provided on the body 1, may be cylindrical, semi-cylindrical in shape, or may have a conical shape with a large top and a small bottom, or may have other shapes allowing water flow to pass through, which is not limited in the present application.

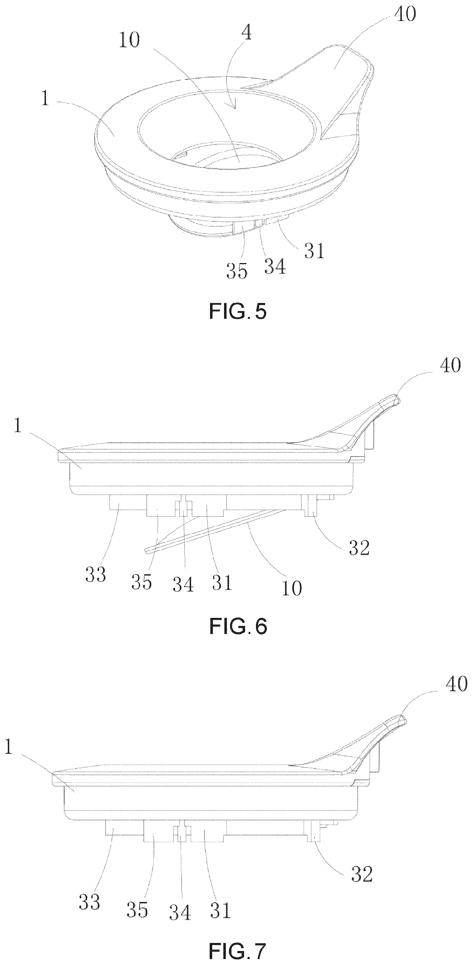

Referring to FIG. 5 to FIG. 8, the baffle 10 may be hinged to the body 1 by means of a rotating shaft, and the closing mechanism 20 may be a return spring disposed between the body 1 and the baffle 10, and the return spring applies from downward an elastic driving force to the tail of the baffle 10, so that the baffle 10 may rotate upward around the rotating shaft and covers the lower part of the liquid injection port 4. In other embodiments, the closing mechanism may also be a counterweight at the other side of the rotating shaft, while the counterweight and the baffle are respectively located at both sides of the rotating shaft to form a seesaw-like movement mode.

In other exemplary embodiments, the baffle 10 may also be provided below the liquid injection port 4 slidably in an up-and-down direction by a mechanism such as a slide, and the closing mechanism is a return spring that is provided below the baffle 10 and drives the baffle 10 to move up-and-down.

Referring to FIG. 6 to FIG. 8, the connecting mechanism 30 is disposed at the lower bottom surface of the body 1 and is slidably connected with the infused object receiving member 2, the sliding direction is parallel to the lower bottom surface of the body 1, so that the infused object receiving member 2 can be simply connected onto the lower bottom surface of the body 1 through a sliding translational movement.

In an embodiment, the connecting mechanism 30 may also be disposed at the side of the body 1 and slidably connected with the infused object receiving member 2. In use, the body 1 is placed on the pot body, and the infused object receiving member 2 is located inside the pot body.

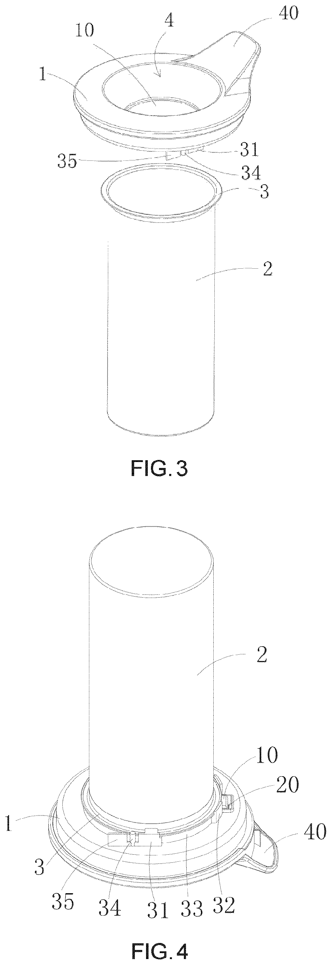

Referring to FIG. 3 to FIG. 4, the connecting mechanism 30 comprises a support part 31, the top of the infused object receiving member 2 has a first protrusion 3, and the support part 31 is used to support the first protrusion 3 so that the infused object receiving member 2 may be secured and sliding-fitted with the connecting mechanism 30.

Specifically, the top of the infused object receiving member 2 may have a flanging to form the first protrusion 3, and the support part 31 has a clasp extending toward the inside of the pot cover such that the flanging is slip-fitted with the clasp such that the infused object receiving member 2 is slidably connected with the pot cover; or a top plate extending away from the infused object receiving member 2 is formed to constitute the first protrusion 3, and the support part 31 has a slide extending toward the inside the pot cover such that the top plate is slip-fitted with the slide to slidably connect the infused object receiving member 2 with the pot cover.

The connecting mechanism 30 further includes a limiting block 32, the limiting block 32 is disposed behind the support part 31 in the sliding direction, and when the limiting block 32 contacts with the first protrusion 3, the limiting block 32 blocks the sliding of the first protrusion 3 towards the limiting block 32. When the infused object receiving member 2 is slidably connected with the connecting mechanism 30 by the first protrusion 3, the limiting block 32 can limit the infused object receiving member 2 such that the infused object receiving member 2 stops after sliding to the mounting position. Referring to FIG. 2, the sliding direction is a direction from left to right in the drawing. The limiting block 32 is disposed at the right of the support part 31, the first protrusion 3 can slide in, along a direction from left to right, and cooperates with the support part 31, and when the first protrusion 3 contacts the limiting block 32, the limiting block 32 blocks the first protrusion 3 from sliding continuously. Where, the limiting block 32 may have a baffle extending in a direction away from the pot cover, the limiting block 32 may be in a flat plate shape, a step shape or any other shape having a curved surface, and the limiting block 32 may be provided only one at an end point of the sliding direction, or may be provided in pairs, which is not particularly limited in the present application.

Referring to FIG. 4, the connecting mechanism 30 further includes a connecting portion 33, the connecting portion 33 is connected to the lower bottom surface of the body 1. The support part 31 is disposed outside of the connecting portion 33, the support part 31 is L-shaped and has an opening towards the connecting portion 33, and a mounting groove is formed between the support part 31 and the connecting portion 33. The mounting groove has a height which is greater than or equal to the height of the first protrusion 3, so that the first protrusion 3 slides within the mounting groove. The connecting portion 33 and the support part 31 form the mounting groove such that a space of movement up-and-down is limited when the infused object receiving member 2 is in slip connection with the pot cover, so that it is convenient for mounting the infused object receiving member 2, and that the infused object receiving member 2 is more stable with a reduced sway after connecting with the pot cover. Specifically, the connecting portion 33 may be semi-circular, annular or square. The support part is L-shaped, and one side of the support part extends towards the connecting portion 33 and is lower than the connecting portion 33 so as to form a mounting groove with the connecting portion 33.

With reference to FIG. 1 to FIG. 4, the connecting portion 33 is annular, the first protrusion 3 is also annular, and the support part 31 is provided in pairs in a diameter direction of the connecting portion 33, so that they are able to support the infused object receiving member 2 more stably.

The mounting groove has a height which is equal to the height of the first protrusion 3, when the infused object receiving member 2 is connected with the connecting mechanism 30, the connecting portion 33 contacts the first protrusion 3 to limit an up-and-down movement of the first protrusion 3 within the mounting groove, so that the infused object receiving member 2 can be mounted more stably and, it can be more steady after connection. Meanwhile, after contacting with the first protrusion 3, the connecting portion 33 may close the opening of the infused object receiving member 2 to a certain extent to avoid the contents (such as tea leaves, etc.) in the infused object receiving member 2 from leaking out, or to avoid other foreign matters from entering the infused object receiving member 2.

Referring to FIG. 1 to FIG. 8, the connecting mechanism 30 further includes a locking pin 34, the locking pin 34 includes a curved surface towards the circle center of the connecting portion 33, the locking pins 34 are provided in pairs and are respectively disposed adjacent to the two support parts 31, and the minimum distance between the two curved surfaces of the two locking pins 34 is smaller than the diameter of the outer rim or periphery of the first protrusion 3 so that the sliding of the first protrusion 3 is limited. When the infused object receiving member 2 is slip-fitted with the connecting mechanism 30, the widest part of the first protrusion 3, i.e. the diameter of the outer rim, passes the locking pin 34, a greater thrust is required to keep the first protrusion 3 continuously sliding; and after the outer rim of the first protrusion 3 passes the locking pin 34, the first protrusion 3 can be clamped since the minimum distance between the two curved surfaces of the locking pin 34 is smaller than the diameter of the outer rim of the first protrusion 3, which limits the movement of the infused object receiving member 2 in a reverse sliding direction, and the infused object receiving member 2 is prevented from being escaped from the connecting mechanism 30 in use. Specifically, the locking pin 34 may have a cylindrical shape, a semi-cylindrical shape, or a U-shaped cylindrical shape, or other shape with a circular surface, while the present application is not limited thereto.

Referring to FIG. 1 to FIG. 2, the connecting mechanism 30 further includes a guide plate 35, the guide plate 35 is disposed outside of the connecting portion 33, and an extending direction of the guide plate 35 coincides with a sliding direction of infused object receiving member 2. The guide plate 35 can guide the slip-fit of the first protrusion 3 and the connecting mechanism 30, so that the infused object receiving member 2 and the body 1 can be connected and detached more conveniently.

More preferably, the guide plates 35 are provided in pairs in a diameter direction of the connecting portion 33, so that a guiding function of the guide plate 35 is enhanced, and a possible damage caused by connecting or disassembling in an improper direction is avoided.

Referring to FIG. 1 to FIG. 8, the support parts 31 are provided in a pair mirror-symmetrically in a diameter direction of the connecting portion 33, the locking pins 34 are provided in a pair in the direction that the support parts 31 are far away from the limiting blocks 32 and are respectively adjacent to the two support parts 31, the guide plate 35 is provided in a pair at the other side of the locking pins 34, and the support parts 31, the locking pins 34 and the guide plate 35 are all disposed outside of the connecting portion 33, so that the connecting mechanism 30 is simple and compact in structure with a good connection performance, and is convenient for connection and disassembly of the infused object receiving member 2 and the pot cover.

Referring to FIG. 1, the pot cover further comprises a handling portion 40 which is provided on the body 1 to facilitate the operation of the body 1 and the embodiment. Preferably, the handling portion 40 is an obliquely extending handle which is provided above the body 1. In other embodiments, the handling portion may also be a recess into which a finger or other tools can be inserted to lift the body 1 or the like.

As mentioned above, the teapot of this embodiment may include the above pot cover and pot body, in which:

The structure of the pot cover has been described above in detail and thus will not be repeated here; the pot body may accommodate liquid such as water, milk or the like. The pot cover may be directly buckled at the top of the pot body, and may be taken off to separate the pot cover and the pot body; the pot cover may also be hinged on the top of the pot body, so that the pot cover can rotate upwards to open the pot cover. The teapot can be an electric pot, but is not limited thereto. The teapot may be directly placed below water flow when adding water thereto, after water flow contacts the baffle 10 of the pot cover, the baffle 10 opens the liquid injection port 4, which makes it possible to add water into the pot body without taking off or opening the pot cover, and thus the teapot is both simple and reliable in structure.

Meanwhile, the teapot provided by the present application may comprise the pot cover, the pot body and the infused object receiving member 2, where the pot cover and the pot body have been described in detail above, and the infused object receiving member 2 may be connected with the pot cover. In addition to the advantage that water can be added into the pot body without taking off or opening the pot cover, the teapot of the present disclosure may also connect with infused object receiving member 2 such that when making tea in the teapot, water directly flows into the infused object receiving member 2 from the liquid injection port 4 through the baffle 10 of the pot cover to brew tea leaves, that is, the advantage of making tea without taking off or opening the pot cover is realized. Besides, with the teapot of the present application, when it is desired to add tea leaves to the infused object receiving member 2, a pressure may be exerted directly to the baffle 10 to push tea leaves into the infused object receiving member 2; and, when taking out or changing tea leaves, the infused object receiving member 2 may be taken out synchronously when taking off the pot cover, so that the operation of making tea can be simplified and more convenient. In addition, the infused object receiving member 2 is connected to the pot cover, so that when the teapot is tilted (for example, when pouring tea), the pot cover can provides a fixation to the infused object receiving member 2, so that the infused object receiving member 2 is prevented from tilt and swing, and thus the usage experience is optimized.

In one embodiment, the infused object receiving member 2 is detachably connected with the pot cover so that the infused object receiving member 2 in the teapot can be taken out when it is not in use or it needs to be brought out to change tea leaves, thereby improves the detachability and use convenience of the teapot.

In addition, the present application may also use other liquids to impact, infuse or brew, or excite the contents in the infused object receiving member 2, for example, to infuse and extract coffee, traditional Chinese medicines, or the like in the infused object receiving member 2 by using various of drinking water (including hot or cold water), alcohol, etc.,. This embodiment can also be applied to kitchen cooking or the like by using special materials such as glass, stainless steel or the like. For example, by placing spices in the infused object receiving member 2, into which the high temperature cooking oil is injected, the cooking oil can activate an aroma of the spices and then flow out of the infused object receiving member, while leaving the residue of the spices in the infused object receiving member.

In addition, the present application can obtain great breakthrough in use, for example, to form it as an independent commodity, place tea leaves in the infused object receiving member 2 and then it can be independently packaged and sold. The shape of the body 1 may be arbitrarily selected according to requirements, for example, the body can be in a relatively long rod shape with two ends supported on two side walls of a larger tank, which can bring great convenience in a crowded public places.

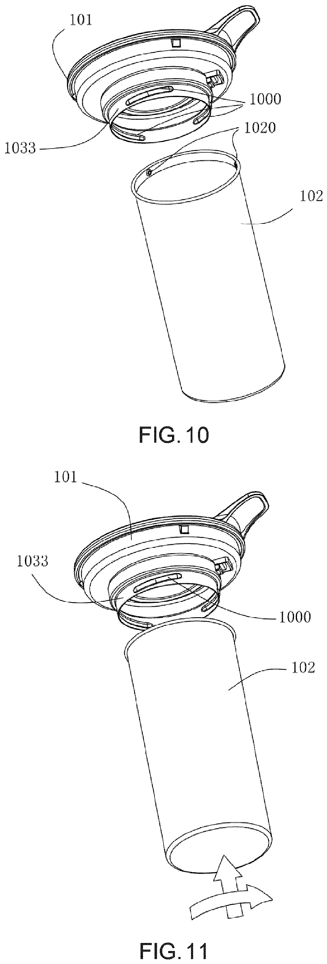

As shown in FIGs. 10 to 11, the connecting mechanism according to another embodiment of the present application includes a slide 1000 and a point-like bulge 1020 which are respectively provided below the body 101 and extend obliquely along a circumferential direction.

Further, the connecting mechanism includes a cylindrical connecting portion 1033 disposed below the body 101, the slide 1000 is a long strip provided at the connecting portion 1033 and protrudes outwards, and the point-like bulge 1020 is provided at the inner wall of the opening of the infused object receiving member 102. Naturally, in other embodiments, the slide 1000 may be a correspondingly shaped recess or through hole, and the positions of the slide 1000 and the point-like bulge 1020 can be interchanged.

During a specific use, the direction of operation is indicated by the arrow in FIG. 11, the infused object receiving member 102 is moved along the translation arrow to approach the connecting portion 1033 and that the point-like bulge 1020 is placed above the slide 1000, and then rotated along the arc arrow so that the infused object receiving member 102 can be connected to the body 101. When it needs to separate the two part, a reverse operation can be performed.

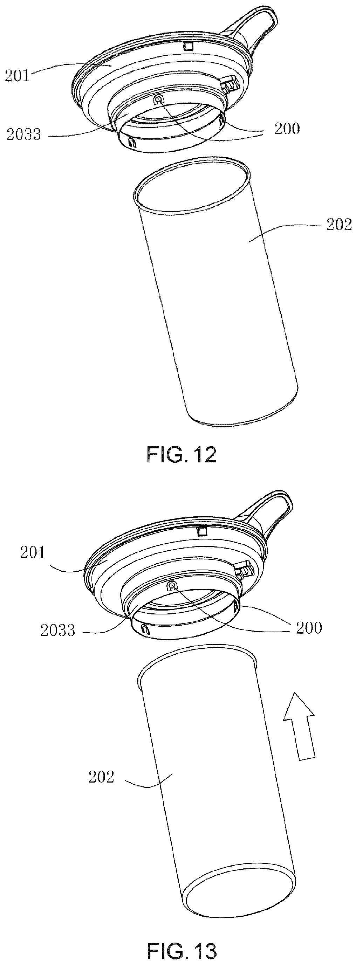

As shown in FIGs. 12 to 13, in another different embodiment of the present application, the connecting mechanism comprises an elastic bulge 200 located below the body 201, and the elastic bulge 200 connects the body 201 to the infused object receiving member 202 in an abutting manner.

Preferably, the connecting mechanism includes a cylindrical connecting portion 2033 disposed below the body 201, the elastic bulge 200 is provided at the connecting portion 2033, and the opening of the infused object receiving member 202 is fitted over on the connecting portion 2033 and enables the elastic bulge 200 to abut against the opening. In other embodiments, the elastic bulge may also be provided at the infused object receiving member.

Preferably, the elastic bulge 200 and the connecting portion 2033 are formed as an integrated configuration, and in order to form such configuration, a sidewall of the connecting portion 2033 with a thin-wall structure may be hollowed out, and a region surrounded by the hollow-out part is inclined toward the outside the sidewall of the connecting portion 2033 so as to form the elastic bulge 200. Naturally, in this case, the material of the connecting portion 2033 should have certain flexibility, for example, the material should be stainless steel, plastic material, but should not be glass or the like.

When applied, as shown in FIG. 13, the infused object receiving member 202 is moved along the arrow direction so that its opening fits or is inserted into the connecting portion 2033 and the elastic bulges 200 abut against the side wall of the infused object receiving member 202, thereby connecting the body 201 with the infused object receiving member 202. When they need to be separated, one just need to pull them along the opposite direction of the arrow.

It should be understood that the present application is not limited to the precise structures described above and shown in the accompanying drawings, and may be subject to various modifications and changes without departing from its scope. The scope of the present application is limited only by the appended claims.

## Claims

1. An infused object container, **characterized in that** the infused object container comprises:
a body provided with a through liquid injection port;
a baffle movably disposed at the liquid injection port;
a closing mechanism which senses an impact force of liquid in the liquid injection port suffered by the baffle and can apply driving force to the baffle to close the liquid injection port, or the closing mechanism is forced to allow the baffle to open the liquid injection port; and
a connecting mechanism connected with the body to connect at least one infused object receiving member.

2. The infused object container according to claim 1, **characterized in that** the infused object container further comprises:
a handling portion formed on the body so as to handle the body.

3. The infused object container according to claim 2, **characterized in that** the handling portion is an obliquely extending handle disposed on top of the body.

4. The infused object container according to any one of claims 1-3, **characterized in that** the infused object container further comprises at least one infused object receiving member, a hollow cavity is provided inside the infused object receiving member to accommodate the infused object, and **in that** the infused object receiving member has an opening which is communicated with the liquid injection port, and a leak hole communicated with the hollow cavity is provided in the infused object receiving member.

5. The infused object container according to claim 4, **characterized in that** the connecting mechanism is communicated with the liquid injection port, and the opening is connected with the connecting mechanism.

6. The infused object container according to claim 5, **characterized in that** the connecting mechanism is disposed at the body, the connecting mechanism is slidably connected with the infused object receiving member, and a sliding direction of the infused object receiving member is parallel to the lower bottom surface of a pot cover.

7. The infused object container according to claim 6, **characterized in that** the connecting mechanism comprises a support part, the infused object receiving member has a first protrusion, the support part is used for supporting the first protrusion, and the infused object receiving member is slip-fitted with the connecting mechanism through the first protrusion.

8. The infused object container according to claim 7, **characterized in that** the connecting mechanism further comprises a limiting block disposed behind the supportpart in the sliding direction, and when the limiting block is in contact with the first protrusion, the limiting block blocks the first protrusion from sliding towards the limiting block.

9. The infused object container according to claim 6, **characterized in that** the connecting mechanism further comprises a connecting portion, the connecting portion is connected to the lower bottom surface of the body, the support part is disposed at the outer side of the connecting portion, the support part is L-shaped, and an opening direction of the support part is towards the connecting portion; and **in that** a mounting groove is formed between the support part and the connecting portion, and the height of the mounting groove is greater than or equal to that of the first protrusion so that the first protrusion can slide in the mounting groove.

10. The infused object container according to claim 9, **characterized in that** the height of the mounting groove is equal to that of the first protrusion, and the connecting portion is in contact with the first protrusion when the infused object receiving member is connected with the connecting mechanism; and/or
the connecting portion is annular, the first protrusion is annular, and the support part is provided in a pair mirror-symmetrically in a diameter direction of the connecting portion.

11. The infused object container according to claim 9, **characterized in that** the connecting mechanism further comprises a locking pin, the locking pin comprises a curved surface towards a circle center of the connecting portion, the locking pin is provided in pairs and are disposed adjacent to the support part respectively, and a minimum distance between the two curved surfaces of the two locking pins is smaller than the diameter of the outer rim of the first protrusion so as to limit the sliding of the first protrusion.

12. The infused object container according to claim 9, **characterized in that** the connecting mechanism further comprises a guide plate, the connecting portion is annular, the guide plate is disposed at the outer side of the connecting portion, the guide plates are provided in pairs in a diameter direction of the connecting portion, and an extending direction of the guide plate is the same as the sliding direction of the infused object receiving member.

13. The infused object container according to claim 5, **characterized in that** the connecting mechanism comprises a slide extending obliquely along a circumferential direction and a point-like bulge, provided below the body or at the opening, respectively.

14. The infused object container according to claim 13, **characterized in that** the connecting mechanism comprises a cylindrical connecting portion disposed below the body, the slide is a long strip provided at the connecting portion and protruding outwards, and the point-like bulge is provided at the inner wall of the opening.

15. The infused object container according to claim 5, **characterized in that** the connecting mechanism comprises an elastic bulge provided below the body or provided at the opening, and the elastic bulge connects the body and the infused object container in an abutting manner.

16. The infused object container according to claim 15, **characterized in that** the connecting mechanism comprises a cylindrical connecting portion disposed below the body, the elastic bulge is provided at the connecting portion, and the opening is fitted over the connecting portion and enables the elastic bulge to abut against the opening.

17. The infused object container according to claim 15, **characterized in that** the elastic bulge and the connecting portion are of an integrated configuration.

18. An infusing device, comprising a liquid accommodating cavity, the liquid accommodating cavity has an open portion, **characterized in that** the infusing device further comprises the infused object container according to any one of claims 1-17, and the body of the infused object container is disposed at the open portion.

19. The infusing device according to claim 18, the infused object container is used for accommodating tea, traditional Chinese medicine, coffee, or spices.
